# EUROPEAN PATENT SPECIFICATION

(11) **EP 4 451 402 B1**
(45) Date of publication and mention of the grant of the patent: **04.11.2026**
(21) Application number: 23211499.1
(22) Date of filing: 22.11.2023
(51) Int. Cl.: H01M 10/0525, H01M 10/0567, H01M 10/0568, H01M 10/0569

(54) **ELECTROLYTE AND LITHIUM-ION BATTERY**
ELEKTROLYT UND LITHIUM-IONEN-BATTERIE
ÉLECTROLYTE ET BATTERIE AU LITHIUM-ION

(30) Priority: 19.04.2023 CN 202310426671
(43) Date of publication of application: 23.10.2024
(73) Proprietor: AESC Dynamics Technology (Jiangsu) Ltd., 214443 Wuxi City, Jiangsu Province (CN); AESC Intelligent Innovation Dynamics Technology (Shanghai) Ltd., Shanghai 201315 (CN); AESC Dynamics Technology (Hubei) Ltd., Shiyan, Hubei Province 442002 (CN); AESC Dynamics Technology (Ordos) Ltd., Ordos, Inner Mongolia Autonomous Region 017200 (CN)
(72) Inventor: YU, Le, Pudong New Area Shanghai, 201315 (CN); SHI, Lei, Pudong New Area Shanghai, 201315 (CN)
(74) Representative: Becker, Eberhard

(56) References cited:
- US-A1- 2018 375 154
- US-A1- 2022 037 698
- US-A1- 2022 115 706
- US-A1- 2022 238 909

## Description

### BACKGROUND

### Technical Field

The disclosure relates to an electrolyte and a lithium-ion battery.

### Description of Related Art

Currently, the general problems of lithium-ion batteries are considerable reduction in energy density and power density under low temperature conditions. Common lithium-ion batteries adopt cyclic carbonates (such as ethylene carbonate EC and propylene carbonate PC) and linear carbonates (such as dimethyl carbonate DMC, ethyl methyl carbonate EMC and diethyl carbonate DEC, etc.) as the solvent, and adopt lithium hexafluorophosphate as the lithium salt in general. Since the solvent has a high melting point and high viscosity, the electrolyte with such combination normally has a poor performance at a low temperature.

Ethylene carbonate EC is a cyclic carbonate solvent commonly adopted in lithium-ion battery electrolytes. The relative dielectric constant of ethylene carbonate is 89, which is greater than the relative dielectric constant of propylene carbonate (65). The addition of ethylene carbonate facilitates the dissociation of lithium hexafluorophosphate and improves the ionic conductivity of the electrolyte. In addition, ethylene carbonate has a higher decomposition potential on the negative electrode side than propylene carbonate, and may be preferentially involved in the formation of solid electrolyte membrane SEI, thereby significantly improving the cycle performance of lithium-ion batteries. Therefore, ethylene carbonate has become an indispensable solvent component of conventional commercial electrolytes.

However, ethylene carbonate has a high freezing point (melting point thereof is 35°C to 38°C). Under low temperature conditions, such as minus 40°C, ethylene carbonate is very likely to be precipitated, which causes the pores of the separator film or electrode sheets to be blocked, and therefore impedance is increased and the performance of batteries is affected. In addition, the precipitation of ethylene carbonate will also cause the relative dielectric constant of the mixed solvent to decrease, reducing the dissociation of lithium hexafluorophosphate. In order to solve this problem, some linear carbonates with lower melting points are commonly adopted, such as dimethyl carbonate (melting point thereof is 4.6°C), ethyl methyl carbonate EMC (melting point thereof is -53°C) or diethyl carbonate (melting point thereof is -74.3°C) are adopted to partially replace EC, thereby lowering the melting point of the mixed solvent. However, the dielectric constants of dimethyl carbonate, ethyl methyl carbonate and diethyl carbonate are only 3.12, 2.96 and 2.82 respectively. The introduction of a high amount of the low-dielectric-constant solvent is obviously not helpful for the dissociation of lithium hexafluorophosphate, which causes the ionic conductivity of the electrolyte to be low and affects the performance of the battery at a low temperature. US 2022 238909 A1 relates to the technical field of secondary lithium-ion batteries, specifically to a secondary lithium-ion battery electrolyte solution for reducing battery resistance and a secondary lithium-ion battery. US 2022 115706 A1 discloses a nonaqueous solvent comprising at least one of the following components: (i) an ester, (ii) a sulfur-containing solvent, (iii) a phosphorus-containing solvent, (iv) an ether, (v) a nitrile, or any combination thereof, wherein the lithium salt is soluble in the solvent; a diluent comprising a fluoroalkyl ether, a fluorinated orthoformate, a fluorinated carbonate, a fluorinated borate, a fluorinated phosphate, a fluorinated phosphite, or any combination thereof, wherein the lithium salt has a solubility in the diluent at least 10 times less than a solubility of the lithium salt in the solvent; and an additive having a different composition than the lithium salt, a different composition than the solvent, and a different composition than the diluent. US 2022 037698 A1 relates to a lithium-ion battery comprising: (a) an anode; (b) a cathode; and (c) an electrolyte composition comprising lithium bis(fluorosulfonyl)imide (LiFSI) dissolved in the following solvent system containing at least the following solvent components: (i) ethylene carbonate and/or propylene carbonate in an amount of 5-70 wt % by weight of the solvent system; and (ii) at least one additional solvent selected from acyclic carbonate, acyclic or cyclic ester, and acyclic or cyclic ether solvents having a molecular weight of no more than 110 g/mol, wherein said at least one additional solvent is in an amount of 30-70 wt % by weight of the solvent system; wherein the wt % amounts for solvent components (i) and (ii), or any additional solvent components (if present) sum to 100 wt %, and wherein LiFSI is present in the solvent system in a concentration of 1.2 M to about 2 M. US 2018 375 154 A1 relates to an electrolyte and a lithium-ion battery. The electrolyte comprises a lithium salt, a non-aqueous organic solvent and an additive, the additive comprises one or two selected from a group consisting of methylene methanedisulfonate and ethylene sulfate, the lithium salt comprises lithium bis(fluorosulfonyl)imide, a content of the lithium bis(fluorosulfonyl)imide is 5%^{~}15% of a total weight of the electrolyte. The methylene methanedisulfonate and/or the ethylene sulfate may significantly decrease the impedance of the SEI membrane, the lithium bis(fluorosulfonyl)imide may improve the stability and the conductivity of the electrolyte and also inhibit the formation of hydrofluoric acid, so as to prevent the non-aqueous organic solvent from being oxidized and decomposed by the hydrofluoric acid and also inhibit the dissolving-out of the metal ions in the positive active material, therefore the lithium-ion battery may have advantages such as excellent low temperature performance, excellent rapid charging performance and long cycle life.

Therefore, how to make the melting point of the electrolyte meet the requirement of practical applications while improving the ionic conductivity of the electrolyte and the performance of the battery at a low temperature is a problem that needs to be solved urgently.

### SUMMARY

The technical problem to be solved by the present disclosure is to overcome the problem that the electrolyte in the related art has a high melting point, a low ionic conductivity and a poor performance at a low temperature. The disclosure provides an electrolyte and a lithium-ion battery. The electrolyte provided by the present disclosure has a low melting point, a high ionic conductivity, a low battery DCR, and an improved performance at a low temperature when adopted in lithium-ion batteries.

The invention is defined as set out in the appended claims, The following serves for a better understanding. The present disclosure solves the above technical problems through the following technical solutions.

The disclosure provides an electrolyte, including a solvent, a lithium salt and an additive; the solvent includes cyclic carbonate, a linear carbonate and ethyl acetate; the cyclic carbonate includes ethylene carbonate; and the lithium salt includes lithium bis(fluorosulfonyl) imide and lithium hexafluorophosphate.

The mass percentage of the cyclic carbonate accounts for 5% to 20% of the total amount of the solvent; a mass percentage of the linear carbonate accounts for 20% to 60% of the total amount of the solvent; the mass percentage of the ethyl acetate accounts for 50% to 95% of the total amount of the solvent.

The mass percentage of the lithium bis(fluorosulfonyl) imide accounts for 8% to 20% of the total amount of the electrolyte.

The disclosure further provides a lithium-ion battery including a negative electrode, a positive electrode, a separator, and the electrolyte as mentioned above.

The positive advantageous effects of the present disclosure are:

The electrolyte provided by the disclosure has a low melting point, a high ionic conductivity, a low battery DCR, and improves the performance at a low temperature when adopted in lithium-ion batteries, and still has high energy density and power density when the temperature is as low as -20°C.

### DESCRIPTION OF THE EMBODIMENTS

In the present disclosure, the mass percentage of the ethyl acetate may account for 50% to 95%, of the total amount of the solvent.

Under the condition that the mass percentage of the ethyl acetate accounts for 20% to 95% of the total amount of the solvent, the electrolyte not only has good lithium salt solubility when used in lithium-ion batteries, but also has excellent DCR at 25°C, DCR at -20°C and discharge rate performance at -20°C. Under the condition that the mass percentage of the ethyl acetate accounts for 50% to 95% of the total amount of the solvent, the DCR at -20°C and discharge rate at -20°C are even better.

In the present disclosure, the mass percentage of the cyclic carbonate accounts for 5%, 10%, 15% or 20%, preferably 5% to 10%, of the total amount of the solvent.

In the present disclosure, under the condition that the mass percentage of the cyclic carbonate accounts for 5% to 20% of the total amount of the solvent, the electrolyte not only has good lithium salt solubility when used in lithium-ion batteries, but also has excellent DCR at 25°C, DCR at -20°C and discharge rate performance at -20°C. Under the condition that the mass percentage of the cyclic carbonate accounts for 5% to 10% of the total amount of the solvent, the DCR at -20°C and discharge rate at -20°C are even better.

In the present disclosure, the mass percentage of the ethylene carbonate accounts for 5% to 20%, e.g., 5%, 10%, 15% or 20%, of the total amount of the solvent.

In the present disclosure, the cyclic carbonate further includes propylene carbonate. The mass percentage of the propylene carbonate preferably accounts for 0% to 10%, e.g., 10%, of the total amount of the solvent.

In the present disclosure, the mass percentage of the lithium bis(fluorosulfonyl) imide accounts for 8%, 10%, 14%, 16%, 18% or 20%, preferably 12% to 20%, of the total amount of the electrolyte.

In the present disclosure, under the condition that the mass percentage of the lithium bis(fluorosulfonyl) imide accounts for 8% to 20% of the total amount of the electrolyte, the electrolyte not only has good lithium salt solubility when used in lithium-ion batteries, but also has excellent DCR at 25°C, DCR at -20°C and discharge rate performance at -20°C. Under the condition that the mass percentage of the lithium bis(fluorosulfonyl) imide accounts for 12% to 20% of the total amount of the electrolyte, the DCR at 25°C, DCR at -20°C and discharge rate at - 20°C are even better.

In the present disclosure, the mass percentage of the lithium salt preferably accounts for 12% to 20%, e.g., 12%, 18% or 20%, of the total amount of the electrolyte.

In the present disclosure, the lithium salt further includes lithium hexafluorophosphate.

The mass percentage of the lithium hexafluorophosphate preferably accounts for 2% to 10%, e.g., 2%, 4%, 8% or 10%, of the total amount of the electrolyte.

In the present disclosure, the solvent further includes linear carbonate.

The linear carbonate is preferably one or more of dimethyl carbonate, ethyl methyl carbonate and diethyl carbonate.

When the linear carbonate includes the dimethyl carbonate, the mass percentage of the dimethyl carbonate may account for 20% to 30% of the total amount of the solvent.

When the linear carbonate includes the ethyl methyl carbonate, the mass percentage of the methyl ethyl carbonate may account for 15% to 30% of the total amount of the solvent.

The mass percentage of the linear carbonate accounts for 20% to 60%, e.g., 20%, 30%, 45% or 60%, of the total amount of the solvent.

In the present disclosure, the additive is preferably one or more of vinylene carbonate, fluoroethylene carbonate, ethylene sulfate and 1,3-propanesultone.

When the additive includes the vinylene carbonate, the mass percentage of the vinylene carbonate accounts for 0.5% to 3% of the total amount of the electrolyte.

When the additive includes the fluoroethylene carbonate, the mass percentage of the fluoroethylene carbonate accounts for 1% to 5% of the total amount of the electrolyte.

In the present disclosure, the mass percentage of the additive preferably accounts for 2% to 5%, such as 3%, of the total amount of the electrolyte.

In a preferred embodiment, the additive is 1% of vinylene carbonate and 2% of fluoroethylene carbonate.

In the present disclosure, the negative electrode preferably includes a negative electrode current collector and a negative electrode active substance coated on the negative electrode current collector.

The negative electrode active substance preferably includes a graphite material or a graphite material-silicon material composite material.

The negative electrode current collector may be made of conductive materials that do not cause chemical changes without limitation, such as copper, stainless steel, aluminum, nickel, titanium, roasted carbon, aluminum-cadmium alloy, or "copper, stainless steel material or aluminum-cadmium alloy surface-treated with carbon, nickel, titanium or silver". In addition, in order to enhance the adhesion of the negative electrode active material, micro-embossments may be formed on the surface of the negative electrode current collector. The negative electrode current collector may have various shapes, such as film, sheet, foil, mesh, porous body, foam body, non-woven body, etc.

In the present disclosure, the thickness of the negative electrode current collector may be 4.5 µm to 10 µm, such as 6 µm or 8 µm.

In the present disclosure, the negative electrode further includes a conductive agent, a binder and a thickener.

Binders are components provided to help bind the active material to the conductive agent. For example, the following materials may be used as binders: one or more of SBR, PAA, CMC, and PVDF.

There is no particular limitation to the conductive agent as long as the conductive agent exhibits high conductivity without causing any chemical changes in the battery to which the conductive agent is applied. For example, the following materials may be used as conductive materials: carbon nanotubes, carbon black or graphene.

There is no particular limitation to the thickener. The addition of the thickener may increase the system viscosity of various components in the negative electrode active substance layer. Generally, sodium carboxymethyl cellulose solution may be selected as the thickener.

In a preferred embodiment, the negative electrode meets the following conditions: the negative electrode active substance is artificial graphite, the conductive agent is Super P, the thickener is sodium carboxymethyl cellulose, and the binder is styrene-butadiene rubber. The mass ratio of the negative electrode active substance, the conductive agent, the thickener and the binder is 96:1:1:2.

In the present disclosure, the positive electrode preferably includes a positive electrode current collector and a positive electrode active substance coated on the positive electrode current collector.

The positive electrode active substance preferably includes one or more of lithium iron phosphate, lithium cobalt oxide, lithium nickel oxide, lithium manganese oxide, lithium nickel manganese oxide, lithium nickel cobalt manganese oxide and lithium nickel cobalt aluminum oxide.

The positive electrode current collector may adopt materials that do not cause chemical changes and have a high conductivity without limitation, such as stainless steel, aluminum, nickel, titanium, roasted carbon, aluminum or stainless steel materials surface-treated with carbon, nickel, titanium, silver, etc. in general. In order to enhance the adhesion of the positive electrode active material, micro-embossments may be formed on the surface of the positive electrode current collector. The positive electrode current collector may have various shapes, such as film, sheet, foil, mesh, porous body, foam body, non-woven body, etc.

In the present disclosure, the thickness of the positive electrode current collector may be conventional thickness in the art, such as 16 µm or 13 µm.

In the present disclosure, the positive electrode further includes a binder and a conductive agent.

In a preferred embodiment, the positive electrode meets the following conditions: the positive electrode active substance is lithium iron phosphate, the binder is polyvinylidene fluoride, and the conductive agent is Super P. The mass ratio of the positive electrode active substance, the binder and the conductive agent is 98:1:1.

In the present disclosure, a separator film that is an insulating film having high ion permeability and mechanical strength is adopted. The pore diameter of the separator film is generally 0.01 µm to 10 µm, and the thickness thereof is generally 5 µm to 300 µm. Examples of the separator film may include, for example, an olefin-based polymer such as chemical-resistant and hydrophobic polypropylene; a sheet or nonwoven fabric made of glass fiber, polyethylene, or the like. When a solid electrolyte such as a polymer is adopted as the electrolyte, the solid electrolyte may also be used as a separator.

In a preferred embodiment, the separator film is a polypropylene separator film with a thickness of 12 µm.

In the present disclosure, on the one hand, through the use of a high amount of linear carbonate and carboxylate, it is possible to reduce the amount of cyclic carbonate with a high melting point and a high viscosity in the electrolyte solvent, thereby effectively solving the problem of solidification at low temperatures and significant increase in viscosity of the electrolyte. Moreover, by combining with a high amount of lithium bis(fluorosulfonyl) imide (LiFSI) as the main lithium salt, the high dissociation ability of LiFSI may allow LiFSI to be fully dissolved and dissociated in linear carbonates and carboxylates with low dielectric constants, thereby providing higher ionic conductivity. On the other hand, the electrolyte using LiFSI as the lithium salt has a wider liquid range and it is possible to avoid solidification of the electrolyte at low temperatures. The combination of a high amount of linear carbonate, carboxylate and a high amount of LiF SI ensures that the battery still has low impedance and high capacity retention rate at low temperatures. Compared with the conventional combination of a low amount of linear carbonate and lithium hexafluorophosphate, the present disclosure effectively reduces the freezing point and viscosity of the electrolyte and improves the ionic conductivity of electrolyte as well as migration number of lithium ions through a specific combination of a high amount of linear carbonate, ethyl acetate and lithium bis(fluorosulfonyl) imide, thereby helping to form SEI with low impedance and significantly improving the rate-performance of the battery at low temperatures.

The reagents and raw materials adopted in the present disclosure are all commercially available.

On the basis of common knowledge in the field, the above preferred conditions may be combined freely to obtain preferred examples of the present disclosure.

The present disclosure is further described below by means of examples, but the present disclosure is not limited to the scope of the described examples. Experimental methods that do not indicate specific conditions in the following examples should be selected according to conventional methods and conditions, or according to specifications of product.

### Example 1

### Preparation of electrolyte:

In a glove box with argon atmosphere with a water content of <10 ppm, battery-grade ethylene carbonate (EC) and ethyl acetate (EA) were mixed at a mass ratio of 2:8 to form an organic solvent. Lithium salt and negative electrode additive were added quantitatively according to the electrolyte composition described in Table 1, and mixed evenly to obtain an electrolyte. The lithium salts were LiPF₆ and LiFSI, the mass fraction of LiPF₆ was 10%, and the mass fraction of LiFSI was 8%. The negative electrode additives were vinylene carbonate (VC) and fluoroethylene carbonate (FEC); the mass fraction of VC was 1%, and the mass fraction of FEC was 2%. In Table 1, the content of various components except the solvent was the mass percentage calculated based on the total mass of the electrolyte, and the mass content of various components in the solvent is the amount present in the total amount of 10 parts of the solvent.

### Examples 2 to 13 and Comparative Examples 1 to 6

The electrolyte solution was prepared according to the experimental parameters in Table 1. The electrolyte compositions of Examples 2 to 13 and Comparative Examples 1 to 6 were the same as those of Example 1 except that they were added according to the proportions in Table 1.

### Examples of effects

### 1. The preparation method of secondary lithium battery is as follows:

### (1) Preparation of lithium iron phosphate positive electrode:

The positive electrode active material (lithium iron phosphate), polyvinylidene fluoride used as the binder, and Super P used as the conductive agent were mixed at a weight ratio of 98:1:1, and an appropriate amount of N-methylpyrrolidone (NMP) was added, and the above mixture was stirred under the action of a vacuum mixer until the system is uniform and transparent, and a positive electrode slurry was obtained. The positive electrode slurry was evenly applied on an aluminum foil with a thickness of 13 um; the aluminum foil was dried at room temperature and transferred to an oven for drying, and then cold-pressed and cut to obtain the positive electrode (electrode sheet).

### (2) Preparation of graphite negative electrode:

Artificial graphite was used as the negative electrode active material, Super P was used as the conductive agent, sodium carboxymethyl cellulose (CMC-Na) was used as the thickener, and styrene-butadiene rubber (SBR) was used as the binder, and all of the above were mixed at a mass ratio of 96:1:1:2, then deionized water was added and stirred under the action of a vacuum mixer to obtain the negative electrode slurry. The negative electrode slurry was evenly applied on the negative electrode current collector copper foil with a thickness of 8 um; the copper foil was dried at room temperature and transferred to an oven for drying, then cold-pressed and cut to obtain the negative electrode (electrode sheet).

### (3) Preparation of electrolyte:

Refer to the preparation of the electrolyte in Example 1.

### (4) Preparation of separator film:

Polypropylene film was used as the separator film.

### (5) Preparation of lithium-ion secondary batteries:

A polypropylene film (PP) with a thickness of 12 µm was used as a separator film, and the positive electrode, separator film, and negative electrode prepared above were laminated in sequence, so that the separator film was between the positive electrode and negative electrode to separate the positive electrode from the negative electrode. Then, all of the above was wrapped with an aluminum plastic film and transferred to a vacuum oven for drying at 120°C and sealed after injecting 3.0 g/Ah of the electrolyte prepared above for the chemical conversion of electrolyte. Finally, a soft-pack battery (lithium-ion battery) with a capacity of 1 Ah was obtained.

### 2. Performance test method:

### (1) Test of DC resistance (DCR) of lithium-ion secondary battery

At a specified temperature, when the battery was discharged to 50% SOC (state of charge, reflecting the remaining capacity of the battery) at a current of 1 C, the current was increased to 4 C and maintained for 30 s, and the difference between the updated stable voltage and the original platform voltage was detected, the ratio of the difference value to the 4 C current value was the DC resistance of the battery. The DCR test result performed after the battery was fully charged for the first time was the initial DCR of the battery.

### (2) Discharge capacity retention test of lithium-ion secondary batteries at low temperatures

After the lithium-ion secondary battery was fully charged, the battery was placed in a constant temperature box at -20°C. After cooling sufficiently, the battery was discharged to the cut-off voltage at a rate of 1 C, and comparison of the percentage of the battery capacity relative to the initial discharge capacity was made.

For lithium-iron phosphate/graphite batteries, the charge and discharge cut-off voltage was: 2.5V to 3.65V.

**Table 1 Electrolyte composition of Examples 1 to 13 and Comparative Examples 1 to 6**

| | Solvent (total amount is 10 parts) | | | | | Lithium salt (%) | | |
|---|---|---|---|---|---|---|---|---|
| Group | EC | PC | EMC | DMC | EA | LiPF₆ | LiFSI | Negative electrode additive |
| Example 1 | 2 | 0 | 0 | 0 | 8 | 10 | 8 | 1%VC, 2%FEC |
| Example 2 | 0.5 | 0 | 0 | 0 | 9.5 | 10 | 8 | 1%VC, 2%FEC |
| Example 3 | 1 | 0 | 0 | 0 | 9 | 10 | 8 | 1%VC, 2%FEC |
| Example 4 | 1 | 0 | 0 | 0 | 9 | 0 | 20 | 1%VC, 2%FEC |
| Example 5 | 1 | 0 | 0 | 0 | 9 | 4 | 8 | 1%VC, 2%FEC |
| Example 6 | 1 | 1 | 3 | 3 | 2 | 10 | 8 | 1%VC, 2%FEC |
| Example 7 | 1.5 | 0 | 1.5 | 3 | 4 | 10 | 8 | 1%VC, 2%FEC |
| Example 8 | 1 | 0 | 0 | 3 | 6 | 10 | 8 | 1%VC, 2%FEC |
| Example 9 | 0.5 | 0 | 0 | 2 | 7.5 | 10 | 8 | 1%VC, 2%FEC |
| Example 10 | 1 | 0 | 0 | 0 | 9 | 8 | 10 | 1%VC, 2%FEC |
| Example 11 | 1 | 0 | 0 | 0 | 9 | 4 | 14 | 1%VC, 2%FEC |
| Example 12 | 1 | 0 | 0 | 0 | 9 | 2 | 16 | 1%VC, 2%FEC |
| Example 13 | 1 | 0 | 0 | 0 | 9 | 0 | 18 | 1%VC, 2%FEC |
| Comparative Example 1 | 3 | 0 | 0 | 0 | 7 | 10 | 8 | 1%VC, 2%FEC |
| Comparative Example 2 | 0 | 0 | 0 | 0 | 10 | 10 | 8 | 1%VC, 2%FEC |
| Comparative Example 3 | 1 | 0 | 4 | 5 | 0 | 10 | 8 | 1%VC, 2%FEC |
| Comparative Example 4 | 1 | 0 | 0 | 0 | 9 | 4 | 6 | 1%VC, 2%FEC |
| Comparative Example 5 | 1 | 0 | 0 | 0 | 9 | 0 | 25 | 1%VC, 2%FEC |
| Comparative Example 6 | 3 | 0 | 0 | 0 | 7 | 0 | 18 | 1%VC, 2%FEC |

**Table 2 Performance test results of Examples 1 to 13 and Comparative Examples 1 to 6**

| Group | Lithium salt solubility | 25°C DCR (mΩ) | -20°C DCR (mΩ) | Discharge rate at-20°C (%) |
|---|---|---|---|---|
| Example 1 | Dissolved | 62 | 363 | 84.8% |
| Example 2 | Dissolved | 71 | 351 | 85.6% |
| Example 3 | Dissolved | 65 | 358 | 85.0% |
| Example 4 | Dissolved | 55 | 291 | 88.1% |
| Example 5 | Dissolved | 77 | 399 | 82.3% |
| Example 6 | Dissolved | 66 | 371 | 83.7% |
| Example 7 | Dissolved | 65 | 368 | 84.3% |
| Example 8 | Dissolved | 66 | 362 | 84.8% |
| Example 9 | Dissolved | 68 | 355 | 85.4% |
| Example 10 | Dissolved | 65 | 349 | 85.7% |
| Example 11 | Dissolved | 62 | 328 | 86.0% |
| Example 12 | Dissolved | 58 | 308 | 86.9% |
| Example 13 | Dissolved | 55 | 289 | 88.0% |
| Comparative Example 1 | Dissolved | 86 | 1013 | 72.5% |
| Comparative Example 2 | Not completely dissolved | 149 | 1992 | 64.7% |
| Comparative Example 3 | Dissolved | 79 | 652 | 75.7% |
| Comparative Example 4 | Dissolved | 97 | 889 | 74.3% |
| Comparative Example 5 | Dissolved | 94 | 802 | 76.1% |
| Comparative Example 6 | Dissolved | 80 | 916 | 73.2% |

Table 2 shows the performance test results of Examples 1 to 13 and Comparative Examples 1 to 6. It can be seen from Examples 1 and 2 and Comparative Examples 1 and 2 that when the amount of EC is in the range of 0.5/10 to 2/10 (that is, when the mass percentage of cyclic carbonate accounts for 5% to 20% of the total amount of solvent), the performance of the batteries is optimal at a low temperature. When the amount of EC is higher than 2/10 (see Comparative Example 1), the DCR thereof is significantly higher than in Example 1, and the low-temperature discharge rate is significantly reduced, indicating that too much cyclic carbonate will cause the melting point of the electrolyte to be high, the viscosity of the electrolyte increases at a low temperature, the conductivity of the electrolyte decreases, and the performance of the battery at a low temperature deteriorates. When the amount of EC is less than 0.5/10 (see Comparative Example 2, that is, when the mass percentage of cyclic carbonate in the total amount of solvent is less than 5%), because there is no solvent with a high enough dielectric constant in the electrolyte, the lithium salt cannot be completely dissolved, resulting in extremely high DCR at room temperature and extremely poor performance at low temperature. In the present disclosure, EC may also be replaced with proper amount of other cyclic carbonates (such as PC), and EA may also be replaced with proper amount of other linear carbonates (such as EMC, DMC). According to Examples 6 to 9, it can be seen that when the amount of cyclic carbonate is in the range of 0.5/10 to 2/10 (that is, the mass percentage of cyclic carbonate accounts for 5% to 20% of the total amount of solvent), as the amount of cyclic carbonate decreases and the amount of EA increases, the DCR of the battery decreases slightly at normal temperature, the DCR decreases significantly at low temperature, and the low-temperature discharge rate increases, which indicates that the decrease in the amount of cyclic carbonate and the increase in the amount of EA reduce the viscosity of the electrolyte and increase the conductivity of the electrolyte; therefore, the performance of the battery at a low temperature is improved. When the amount of EA is 0 (see Comparative Example 3), the viscosity of the electrolyte is high, so the performance of Comparative Example 3 at a low temperature is worse than that of the electrolyte containing EA. It can be seen from Examples 3, 4, and 5 and Comparative Examples 4 and 5 that when the amount of LiFSI is between 8% to 20%, the battery has the optimal performance at a low temperature. When the amount of LiFSI is lower than 8% (see Comparative Example 4), the DCR and performance of the battery at a low temperature are significantly deteriorated; when the amount of LiFSI is higher than 20% (see Comparative Example 5), since the concentration of lithium salt is too high, the viscosity of the electrolyte increases and the dissociation degree of the lithium salt decreases, so the performance of the battery will decrease at a low temperature.

According to Examples 3 and 10 to 13, when the solvent system remains unchanged and the concentration of lithium salt is in the range of 12% to 20%, increasing the amount of LiFSI in the lithium salt will significantly decrease the DCR of the corresponding battery at normal temperature and a low temperature, and the low-temperature discharge rate continues to increase. The reason is that LiFSI dissociates more easily than LiPF₆, has higher solubility in solvents, and provides higher conductivity. Therefore, the more the amount of LiFSI is adopted, the better the performance of the battery will be at a low temperature.

It can be seen from Comparative Example 6 that when the amount of cyclic carbonate is 3/10 (that is, the mass percentage of cyclic carbonate accounts for 30% of the total amount of solvent), even if the amount of LiFSI is increased to 18%, the DCR and performance at a low temperature of the corresponding battery are also much worse than those of the embodiments with low amount of cyclic carbonate, which indicates that the amount of cyclic carbonate must be reduced to 2/10 or less (that is, the mass percentage of cyclic carbonate in the total amount of solvent is 20 % or less) to ensure that the electrolyte has a good conductivity and a performance at a low temperature.

## Claims

1. An electrolyte comprising a solvent, a lithium salt and an additive; wherein the solvent comprises cyclic carbonate, linear carbonate, and ethyl acetate; the cyclic carbonate comprises ethylene carbonate; and the lithium salt comprises lithium bis(fluorosulfonyl) imide and lithium hexafluorophosphate;
a mass percentage of the cyclic carbonate accounts for 5% to 20% of a total amount of the solvent; a mass percentage of the linear carbonate accounts for 20% to 60% of the total amount of the solvent; a mass percentage of the ethyl acetate accounts for 50% to 95% of the total amount of the solvent;
a mass percentage of the lithium bis(fluorosulfonyl) imide accounts for 8% to 20% of a total amount of the electrolyte.

2. The electrolyte according to claim 1, wherein the cyclic carbonate further comprises propylene carbonate, and a mass percentage of the propylene carbonate accounts for 0% to 10% of the total amount of the solvent.

3. The electrolyte according to claim 1, wherein a mass percentage of the lithium hexafluorophosphate accounts for 2% to 10% of the total amount of the electrolyte.

4. The electrolyte according to claim 1, wherein a mass percentage of the additive accounts for 2% to 5% of the total amount of the electrolyte.

5. The electrolyte according to claim 1, wherein the additive is one or more of vinylene carbonate, fluoroethylene carbonate, ethylene sulfate and 1,3-propanesultone.

6. The electrolyte according to claim 1, wherein the linear carbonate is one or more of dimethyl carbonate, ethyl methyl carbonate and diethyl carbonate.

7. A lithium-ion battery comprising a negative electrode, a positive electrode, a separator film, and the electrolyte according to claim 1.

## Patentansprüche

1. Elektrolyt, umfassend ein Lösungsmittel, ein Lithiumsalz und ein Additiv; wobei das Lösungsmittel cyclisches Carbonat, lineares Carbonat und Ethylacetat umfasst; das cyclische Carbonat Ethylencarbonat umfasst; und das Lithiumsalz Lithiumbis(fluorsulfonyl)imid und Lithiumhexafluorophosphat umfasst; ein Massenanteil des cyclischen Carbonats 5 % bis 20 % einer Gesamtmenge des Lösungsmittels ausmacht; ein Massenanteil des linearen Carbonats 20 % bis 60 % der Gesamtmenge des Lösungsmittels ausmacht; ein Massenanteil des Ethylacetats 50 % bis 95 % der Gesamtmenge des Lösungsmittels ausmacht; ein Massenanteil des Lithiumbis(fluorsulfonyl)imids 8 % bis 20 % der Gesamtmenge des Elektrolyten ausmacht.

2. Elektrolyt nach Anspruch 1, wobei das cyclische Carbonat ferner Propylencarbonat umfasst und ein Massenanteil des Propylencarbonats 0 % bis 10 % der Gesamtmenge des Lösungsmittels ausmacht.

3. Elektrolyt nach Anspruch 1, wobei ein Massenanteil des Lithiumhexafluorophosphats 2 % bis 10 % der Gesamtmenge des Elektrolyten ausmacht.

4. Elektrolyt nach Anspruch 1, wobei ein Massenanteil des Additivs 2 % bis 5 % der Gesamtmenge des Elektrolyten ausmacht.

5. Elektrolyt nach Anspruch 1, wobei das Additiv eines oder mehrere von Vinylencarbonat, Fluorethylencarbonat, Ethylensulfat und 1,3-Propansulton ist.

6. Elektrolyt nach Anspruch 1, wobei das lineare Carbonat eines oder mehrere von Dimethylcarbonat, Ethylmethylcarbonat und Diethylcarbonat ist.

7. Lithium-Ionen-Batterie, umfassend eine negative Elektrode, eine positive Elektrode, eine Separatorfolie und den Elektrolyten nach Anspruch 1.

## Revendications

1. Électrolyte comprenant un solvant, un sel de lithium et un additif ; dans lequel le solvant comprend du carbonate cyclique, du carbonate linéaire et de l'acétate d'éthyle ; le carbonate cyclique comprend du carbonate d'éthylène ; et le sel de lithium comprend du bis(fluorosulfonyl)imide de lithium et de l'hexafluorophosphate de lithium ;
le teneur massique du carbonate cyclique représente de 5 % à 20 % de la quantité totale du solvant ; le teneur massique du carbonate linéaire représente de 20 % à 60 % de la quantité totale du solvant ; le teneur massique de l'acétate d'éthyle représente de 50 % à 95 % de la quantité totale du solvant ;
le teneur massique du bis(fluorosulfonyl)imide de lithium représente de 8 % à 20 % de la quantité totale de l'électrolyte.

2. Électrolyte selon la revendication 1, dans lequel le carbonate cyclique comprend en outre du carbonate de propylène, et le teneur massique du carbonate de propylène représente de 0 % à 10 % de la quantité totale du solvant.

3. Électrolyte selon la revendication 1, dans lequel le teneur massique de l'hexafluorophosphate de lithium représente de 2 % à 10 % de la quantité totale de l'électrolyte.

4. Électrolyte selon la revendication 1, dans lequel le teneur massique de l'additif représente de 2 % à 5 % de la quantité totale de l'électrolyte.

5. Électrolyte selon la revendication 1, dans lequel l'additif est constitué d'un ou plusieurs des composés suivants : carbonate de vinylène, carbonate de fluoroéthylène, sulfate d'éthylène et 1,3-propanesultone.

6. Électrolyte selon la revendication 1, dans lequel le carbonate linéaire est constitué d'un ou plusieurs des composés suivants : carbonate de diméthyle, carbonate d'éthylméthyle et carbonate de diéthyle.

7. Batterie lithium-ion comprenant une électrode négative, une électrode positive, une membrane séparatrice et l'électrolyte selon la revendication 1.
